# EUROPEAN PATENT SPECIFICATION

(11) **EP 2 328 378 B1**
(45) Date of publication and mention of the grant of the patent: **29.01.2014**
(21) Application number: 11158361.3
(22) Date of filing: 31.10.2007
(51) Int. Cl.: H04W 48/18, H04W 88/06

(54) **System and method for selecting a message transport for a multi-mode communication device**
System und Verfahren zur Auswahl eines Nachrichtentransports für eine Multimodus-Kommunikationsvorrichtung
Système et procédé pour la sélection d'un transport de message pour un dispositif de communication multimodal

(43) Date of publication of application: 01.06.2011
(62) Divisional of application: 07119806.3
(73) Proprietor: BlackBerry Limited, Waterloo, ON N2K 0A7 (CA)
(72) Inventor: Adams, Neil, Waterloo Ontario N2L 3W8 (CA); Robertson, Ian, Waterloo Ontario N2J 1H4 (CA)
(74) Representative: Moore, Barry

(56) References cited:
- EP-A- 1 612 996
- EP-A- 1 708 526
- US-A1- 2007 242 619
- US-B1- 6 934 558

## Description

The present disclosure described herein relates to a system and method for selecting a communications transport mechanism for a wireless, communication device. In particular, the system and method may select an appropriate transport mode for sending an outbound message, such as via a Wireless-Fidelity (Wi-Fi) or a cellular connection.

### BACKGROUND

Wireless handheld mobile communication devices perform a variety of functions to enable mobile users to stay organized and in contact with others in a communication network through email, schedulers and address books.

As wireless communication devices are portable, they connect and communicate with several different wireless communication networks as they roam. A multi-mode wireless communication device provides multiple types of message transports for the device, giving it more connection flexibilities for its transmissions, allowing some types of transmissions to be sent over different communication networks. For example, a dual-mode communication device may be both cellular and Wi-Fi enabled. As such, an email may be sent from that device via a Wi-Fi connection through a Wireless Local Area Network (WLAN) adhering to Wi-Fi transmission protocols; additionally or alternatively, the same email may be sent via a cellular network connection following its transmission protocols. Each communication network has performance and costing characteristics which may make it preferable for a device to use one network over another for its transmissions, depending on the circumstances.

US-A-6934558 relates to a "frequency agile" wireless communication product in which a communication channel can be chosen according to various criteria which may be user defined. In one embodiment, the criteria for which communication channel to use can be stored in a user profile in memory. The disclosed user defined criteria could be the cost of sending a data message, the quality of transmission link (signal strength, interference actual or potential), the potential for being bumped off of the system (is service provider at near full capacity), the security of transmission, any special criteria which the user could variably program into his omni-modal wireless product based on the user's desires or any one or more combinations of the above criteria. Wireless service providers may broadcast electronically as part of any "handshaking" procedure with an omni-modal wireless product information such as rate information and information regarding system operating characteristics such as percent of system capacity in use and/or likelihood of being dropped.

### GENERAL

In a first aspect, there is preferably provided a method for selecting a network from a plurality of networks for use by a communication device to process an outbound data transmission from said device, the method comprising:
tracking a plurality of transmission characteristics for each network of said plurality of networks at said device at regular intervals or upon specific events detected by said device;
evaluating said plurality of transmission characteristics for each of said plurality of networks to identify a network from said plurality of networks relating to a set of transmission options relating to respective transmission characteristics of said plurality of networks and then when said data transmission is to be sent, presenting in a graphical user interface on said device said set of options;
receiving a selection of one of said set of options; and
processing said data transmission using the selected network associated with the selected option.

In the method, the data transmission may be an outbound transmission; the networks include at least a cellular network and a Wireless-Fidelity (Wi-Fi) network; and one transmission characteristics is a cost to transmit the outbound transmission.

In the method, the outbound transmission may be an email.

In the method, the options may include an option to use an immediately previously used network.

In the method, the options may further comprise an option identifying a network that has the strongest transmission characteristics.

In the method, the options may further comprise an option identifying a network that has a predetermined level of security.

In the method, the options may further comprise an attachment option identifying a default network that has been identified to transmit data transmissions having attachments.

In the method, the options may further comprise an option identifying a network to transmit the data transmission when the data transmission is a predetermined size.

In the method, the options may be presented as single options or a collection of any set of options.

In the method, the networks may include (at least) two networks of the same technology. Further, the list may further comprise an option to use a network that has accesses those two networks.

In the method, during transmission of the data transmission, each data packet associated with the data transmission may be marked as being transmitted via the selected network.

In the method, transmission of the data transmission through the network may be deferred if the network is currently unavailable to the device until the network is available to the device.

In a second aspect, there is preferably provided a communication device having communication capabilities with a plurality of networks, the communication device comprising: a microprocessor; a display; memory;
a communication subsystem to provide transmission and reception of an outbound data transmission with said plurality of networks;
a tracking module to track a plurality of transmission characteristics of said plurality of networks at said device at regular intervals or upon specific events detected by said device, and to store results in said memory;
a display module to selectively display a list of options in a graphical user interface on said display identified by respective transmission characteristics when said data transmission is to be sent and to allow a selection to be made to from said list;
a monitoring module to monitor at least the transmission characteristic identifying said selected option for each of said plurality of networks to identify a selected network from said plurality of networks for at least the selected option of said set of options; and
a process module to process said data transmission at said device utilizing said selected network.

In the device, the networks may include at least a cellular network and a Wireless-Fidelity (Wi-Fi) network; the transmission characteristics may include a cost of usage to transmit the outbound transmission; and the options may include a cost-based option reflecting the cost of usage.

In the device, the outbound transmission may be an email and the process module may be an application operating through the microprocessor to generate and review emails directed to the device.

In the device, the options may include a default option to select an immediately previously used network for the selected network.

In the device, the options may include an option to select a network that has the strongest transmission characteristics.

The device may further comprise a module to encode the email in a manner determined from a selected encoding option. Therein, the options may include an encoding option for the email prior to the third module configuring the email for transmission using the selected network.

In the device, the fourth module may mark each data packet associated with the email as being transmitted by the selected network.

In the device, the fourth module may defer transmission of the email through the selected network if the selected network is currently unavailable to the device until the selected network is available to the device.

In a third aspect, a method for selecting a network for use by a communication device to process an outbound data transmission from the device is provided. The method comprises: tracking transmission characteristics of the networks; accessing a set of options to identify a set transmission characteristics; evaluating the set transmission characteristics for each network to identify a selected network for each option; displaying the options in a list on a display on the device in a graphical user interface (GUI); and when an option is selected through said GUI, processing the outbound data transmission using the selected network associated with the selected option. Preferably, one network is Wireless-Fidelity (Wi-Fi) network; and one transmission characteristic is a cost to transmit the outbound transmission.

In the method, the options may further include at least one of the following options: a first option to use an immediately previously used network for the selected network; a second option to use a first network that has a transmission characteristic stronger than a transmission characteristic of a second network; and a third option to use a network that has a predetermined level of security.

In other aspects, various combinations of sets and subsets of the above aspects are provided.

Exemplary details of embodiments are provided herein. Briefly an embodiment provides a method and system for a multi-mode communication device, such as a dual-mode cellular phone, to select a network for transmitting and / or receiving its data, such an email. A choice for a network may be provided to the device at some stage during the processing of transmission of the data. The choice may be encoded as a default selection, which may be updated. Additionally, the network choices may be evaluated to identify a preferred option for each selection and then the selection is used to transmit the data. Additionally, or alternatively, a set of choices (each possibly having separate defaults) may be presented to the user via a user interface on the device. For example, for an email, the user interface may be presented on the device when the email is first composed or when it is about to be sent. In order to assist with the selection process, an embodiment tracks, provides and presents characteristics relating to each available network to the user on the device. The characteristics may relate to transmission quality, costing, signal strength and others. The characteristics may be monitored continuously or at given intervals (e.g. once every 10 minutes or so) or at given events (e.g. at the composition of an email or at the initiation of a send command).

First, a description is provided on general concepts and features of an embodiment, its related network connections and characteristics that may be presented to the user for each network connection available to the device. Then, further detail is provided on an exemplary algorithm used to select which network connection to use for the transmission.

### BRIEF DESCRIPTION OF THE DRAWINGS

Embodiments of the present disclosure will now be described, by way of example only, with reference to the accompanying drawings, in which:

Fig. 1 is a schematic diagram of a plurality of communication networks that are in communication with a wireless device as provided in an embodiment;

Fig. 2A is a flowchart of a process executed by the wireless device of Fig. 1 in creating an outbound email transmission and evaluating connections to communication networks to select a network to use for its transmissions;

Fig. 2B is a schematic diagram of an exemplary graphical user interface (GUI) generated on the device of Fig. 1 when executing the process of Fig. 2A;

Fig. 2C is a schematic diagram of a second GUI generated on the device of Fig. 1 when executing the process of Fig. 2A;

Fig. 3 is a schematic representation of the wireless electronic device in Fig. 1 in accordance with an embodiment; and

Fig. 4 is a block diagram of certain internal components of the device of Fig. 3.

### DETAILED PREFERRED EMBODIMENTS

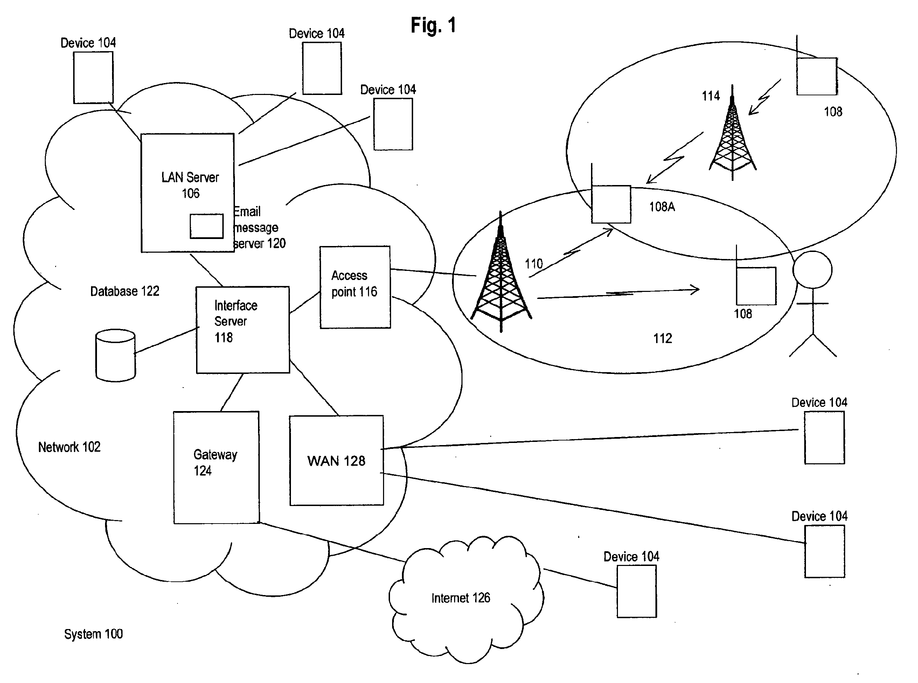

Fig. 1 provides details on a set of interconnected networks are provided in communication system 100. Exemplary networks in system 100 are network 102, Local Area Network (LAN) 106, wireless network 110, cellular network 114 and Wide Area Network (WAN) 128. Each is described in turn.

Network 102 provides a suite of applications, services and data to its connected devices 104 through its local associated servers. Network 102 can be implemented in any known architecture, providing wired or wireless connections to its elements.

Wireless network 110 normally delivers information to and from mobile devices via RF transmissions between base stations and the mobile devices 108 through transmission area 112.

WAN 128 is connected to network 102 and provides connections among its (remote) devices 104 and other devices in system 100.

Cellular network 114 provides wireless communications between wireless devices 108 that are within the coverage area of cellular network 114. The coverage area may overlap with the coverage areas of other networks, such as LAN 106, network 102 and wireless network 110. Cellular network 114 provides voice and data services to devices 108. Data-centric technologies for cellular network 114 include the Mobitex (trademark) Radio Network ("Mobitex") and the DataTAC (trademark) Radio Network ("DataTAC"). Voice-centric technologies for cellular network 114 include Personal Communication Systems (PCS) networks like Global System for Mobile Communications (GSM) and Time Division Multiple Access (TDMA) systems. Certain networks provide multiple systems. For example, dual-mode wireless networks include Code Division Multiple Access (CDMA) networks, General Packet Radio Service (GPRS) networks, and so-called third-generation (3G) networks, such as Enhanced Data rates for Global Evolution (EDGE) and Universal Mobile Telecommunications Systems (UMTS). Other network communication technologies that may be employed include, for example, Ultra Mobile Broadband (UMB), Evolution-Data Optimized (EV-DO), and High Speed Packet Access (HSPA), etc.

In network 102, a series of linking modules and servers are provided to connect network 102 to other networks. Interface server 118 provides an interface for network 102 to a wireless network 110. Functions such as providing addresses for mobile devices 108, encoding or otherwise transforming messages for wireless transmission, and any other required interface functions are performed by the server 118. Although server 118 operates with the single wireless network 110, wireless gateways may be configured to operate with more than one wireless network in alternative embodiments. WAN 128 is also connected to network 102 via server 118. As such, any device (computer) 104 (directly) connected to WAN 128 may exchange messages with a mobile device 108 in wireless network 110 through interface 118. Alternatively, private wireless network gateways, such as wireless Virtual Private Network (VPN) routers, could be implemented to provide a private interface to a wireless network. For example, a wireless VPN router implemented in LAN 106 may provide a private interface from LAN 106 to one or more mobile devices 108 through interface server 118.

Wireless VPN routers and other types of private interfaces to mobile device 108 may effectively be extended to entities outside the LAN 106 by providing a message forwarding or redirection system that operates with the message server using redirectors known to those of skill in the art. An exemplary system is described in U.S. patent 6,219,694. In this type of redirection system, incoming messages received by the message server and addressed to a user of a mobile device 108 are sent through the wireless network interface, either a wireless VPN router, a wireless gateway or other interface, to the wireless network 110 and to the user's mobile device 108.

In network 102, LAN 106 provides a messaging client to its connected devices 104. It is normally located behind a security firewall (not shown) in network 102. Within LAN 106, message server 120 operates on a computer behind the firewall and serves as the primary interface to exchange messages both within the LAN 106. Two known message servers 120 are Microsoft Exchange (trademark) and Lotus Domino (trademark). Messages are received by message server 120, distributed to the appropriate mailboxes for user accounts addressed in the received message, and then accessed by a user through a computer system operating as a messaging client. A Wireless Application Protocol (WAP) gateway provides an alternate interface to a user's mailbox on server 120, through which a list of messages in a user's mailbox on the message server, and possibly each message or a portion of each message, could be sent to the mobile device 108. Database 122 provides a data storage system for one or more elements in network 102, including LAN 106. Security systems within network 102 can be provided by known techniques and systems. Gateway 124 provides and monitors selected communications between elements in network 102 and external devices connected through Internet 126.

Further detail is now provided on wireless network 110. As with cellular network 114, wireless network 110 may be a data-centric network, a voice-centric network, or a dual-mode network. In one embodiment, wireless network 110 is implemented as a Wi-Fi network generally following standards set by the IEEE LAN/MAN Standards Committee, known as IEEE 802, through its working group "11". The 802.11 standard defines media access control (MAC) and physical (PHY) layers in the Open Systems Interconnection (OSI) protocol model for WLAN. Such standards are known to those of skill in the art. Administrative functions for wireless network 110 may be provided by software controlling it. The software may administer functions such as network identification and network access parameters. The initial 802.11 standard was followed with a series of amendments, where each amendment was identified by an alphabetic suffix following in the standard's numeric identifier "802.11". The family of 802.11 amendments is sometimes referred to as the 802.11x family. Currently, the 802.11 amendments encompass six wireless modulation techniques that all use the same communication protocol among their communicating elements. Such networks are deployed in one or more of the five current versions of 802.11: 802.11a, b, g and n. Specific transmission details and parameters of these networks are known to those of skill in the art.

Wireless network 110 includes an antenna and supporting radio transmission equipment known to those skilled in the art. Access point (AP) 116 is shown in network 102 and in an embodiment, each AP 116 is an IEEE 802.11 radio receiver/transmitter (or transceiver) and functions as a bridge between its respective WLAN 110 and network 102. For security, each AP 116 may be communicatively coupled to network 102 through a respective firewall and/or VPN (not shown). The AP provides data distribution services among devices 108 within wireless network 110 and between devices 108 in wireless network 110 and other devices in other connected networks. One distribution service provided by access point 108 for its related stations is to establish a logical connection to its communicating devices 108.

Device 108 may be a data communication device, a voice communication device, or a multiple-mode device capable of voice, data and other types of communications. Wireless device 108 may be a handheld device, cell phone, smart phone, personal digital assistant (PDA), and / or computer (either desktop or portable) having a (wireless) network card, network adapter and/or network interface controller (NIC) installed therein.

In certain locations, device 108 may be able to simultaneously access to multiple networks, such device 108A which is within the coverage zones of wireless network 110 and cellular network 114 simultaneously. In an embodiment. device 108A has communication modules to communicate with both networks 110 and 114. Device 108A also has modules to evaluate each connection to each network and to provide the user with information and options to allow him to select an appropriate network for a particular transmission, such as an outbound data transmission.

Different networks have different operating characteristics. For example, cellular networks generally have slower data rates compared with LAN/WLAN networks, and have relatively high fees (especially when roaming). However, cellular networks are accessible in a very wide swath of locations and attachment to cellular networks is generally automatic and transparent to the user and the underlying application. Wi-Fi networks provide relatively fast data rates and are generally cheaper in fees (or even free) compared with cellular networks. However, Wi-Fi networks presently are accessible in select locations and attaching to a Wi-Fi network requires actions to be taken by the user. Further, the user actions often need to be repeated for different Wi-Fi networks. Cost is not the only consideration when choosing a network. Additionally, it may be useful to choose a network based upon the operating characteristics of the networks. Different characteristics may be more or less important for the current communications depending on the context, location, time, size, or other parameters or characteristics of the current communication.

It will be appreciated that device 108A may be in simultaneous contact with several networks of a given technology class or type. For example, device 108A may simultaneously have connections to several Wi-Fi networks and / or several cellular networks.

Creation, encapsulation and transmission of an outbound data transmission from device 108A may follow any structured protocols. However, one commonly used set of layered applications is provided in the Open Systems Interconnection (OSI)-connection layers. Therein, the host layers generally handle the creation of the outbound transmission through the software operating on device 108A and the media layers handle the encapsulation and transmission the outbound transmission. The selection of the transmitting network (e.g. Wi-Fi or cellular) will determine how the outbound transmission is encapsulated and transmitted. Each data packet of the outbound transmission may be tagged with data to identify the transmitting network. For some outbound traffic, data may be encapsulated by applications following the OSI model, but then the actual transmission of the data stream may be handled by a process that may not necessarily conform to the OSI model.

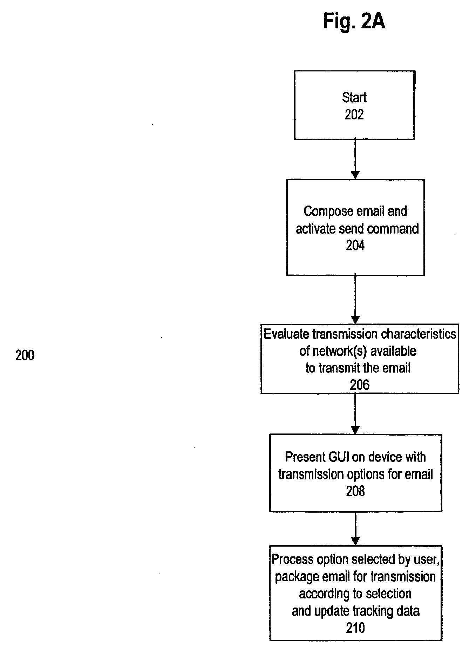

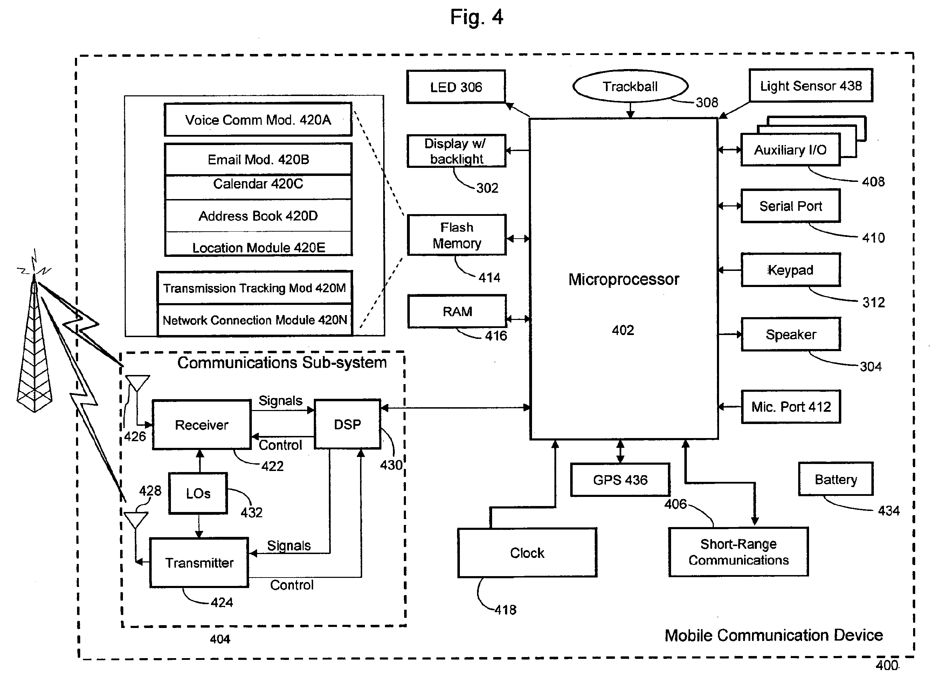

Referring to Figs. 2A-2C, further details on an embodiment are provided. In Fig. 2A, process 200 is executed on device 108A to compose an outbound data transmission then to determine options for transmission of the outbound transmission, then to package and send the outbound transmission according to a selection made by the user. It will be appreciated that process 200 may be implemented on device 108A in one or more of the following: software, firmware and hardware modules. For example, Fig. 4 shows email module 420B, transmission tracking module 420M and network connection module 420N. Each module will be described later in more detail. For the purpose of describing process 200, the outbound transmission is an email.

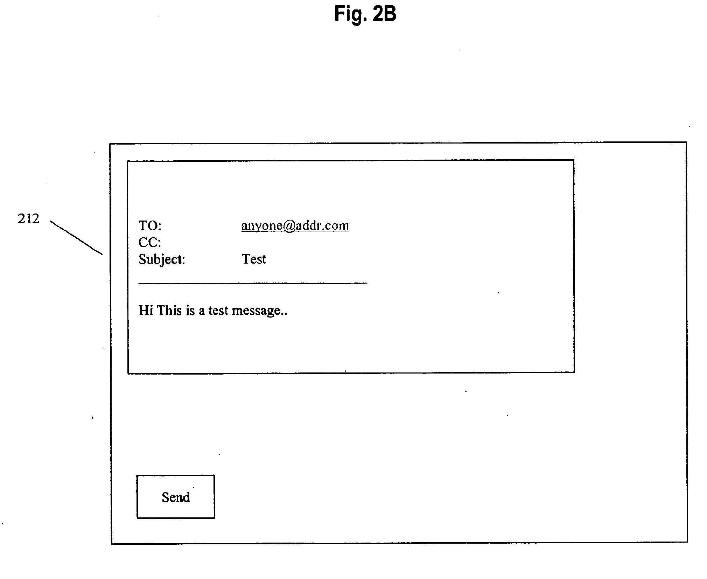

At step 202, process 200 starts. At step 204, an email module has been activated and an outbound email has been composed in the graphical user interface presented by the email program on device 108A. Referring to Fig. 2B, GUI 212 is an exemplary GUI generated by the email module used to control creation of the email. When the user has completed the email, activation of the "send" command initiates a process to select a transport mode for the email. The command may be activated through a predefined "send" icon or a selection command through a command menu in the program.

Referring back to Fig. 2A, after the send command is activated, before the actual transmission of the email, in step 206, device 108A evaluates the transmission characteristics of network(s) available to transmit the email. This may involve actively reconfirming operating parameters of all types of transmission modes that are able to transmit the email by device 108A (e.g. cellular, Wi-Fi, etc.). This may also involve accessing a database containing last parameters for each transmission mode. Alternatively or additionally, a set of transmission characteristics may be stored for each network and the stored data may be periodically updated.

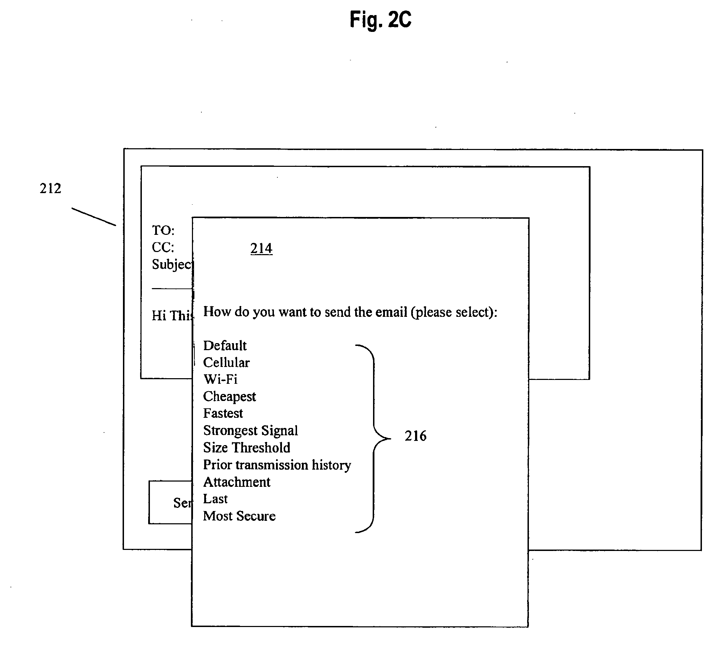

Once the evaluations (and / or data accesses) are complete, process 200 collects and analyses the result. From the results, a set of transmission options are available to the user. The options are presented on device 108A through a GUI in step 208. Referring to Fig. 2C, GUI 214 is an exemplary GUI generated on device 108A to present the options 216 to the user. The GUI also allows a selection to be made from the options. As noted, options 216 provide a selection of transmission networks, including, for example, "default", "cellular"; "Wi-Fi"; "cheapest"; "fastest", "strongest signal", "size threshold", "prior transmission history", "attachment," "last" and "most secure." Other options may also be provided. Sub-options and parameters may be provided for each option to tailor its parameters. It can be seen that the options can be grouped into one or more broad categories, including: options based on transmission costs or histories (e.g. "cheapest", "prior transmission history", etc.); options based on a characteristics of a network (e.g. "fastest", "strongest signal", "most secure" etc.); characteristics of the current transmission (e.g. "attachment", "size threshold", etc.), options providing default(s) (e.g. "default", "cellular", "Wi-Fi", "last", etc.). Other categories may be provided. Options may be listed in one or more categories. Options may be presented as single options in separate GUIs.

A brief description of exemplary options is below. It will be appreciated that other options may be provided and that the options listed below are not exhaustive. Names can be changed for the options.

One option is a "default" option, where default network is selected. The default network may be set to be the lower cost route. The parameters for the default may be changed. The default may also be set to be the last network selected for the last communication sent by the program (or any other program).

Another option is a "cellular" option that send the message over the connected cellular network.

Another option is a "Wi-Fi" option that sends the message over the connected Wi-Fi network.

Another option is a "Cheapest" option that selects the network having the lower cost. Cost may be measured to account for any one or more cost-based factors, including access time charges, roaming charges, prime time charges, excess charges in view of prepayment plans, power usage to transmit the message, etc.

Another option is a "Fastest" option that selects the network having the faster available data transmission rate.

Another option is a "Strongest" option that selects the network having the stronger current transmission signal quality or other measure of strength for a network.

Another option is a "Size Threshold" option that selects the network based on the size of the message and / or its attachment. The user may be allowed to enter a size parameter through a GUI selection: "Send over Wi-Fi if message exceeds N Kbytes". This option may be provided as a default. This default option may save the user from having to modify that field each time a message is sent. Alternatively all messages under a certain size (in Kbytes) may be sent over a selected network (e.g. cellular).

Another option is a "Prior Transmission History" option where the selected network is chosen based on the amount of data that has been sent over a given network over a given time period. If one network has a reached a data limit, another network would be selected. For example if the user's data plan for a given network (e.g. cellular) is 1 MByte, this option would then switch the selected network and send subsequent messages via another network (e.g. Wi-Fi) when the data plan approaches or passes its limit. Additionally, any default settings for a selected network may be changed when a switch occurs. The selected network may revert to a previous network upon a given event (e.g. the changing of a month or the billing period would reset the limit).

Another option is an "Attachment" option where the selected network is determined on a network's abilities to process an attachment. The abilities could include cost, speed and / or security thresholds.

Another option is a "Last" option where the message is sent over the last used network.

Another option is a "Most secure" or "Sufficiently secure" option where the selected network is chosen based on the level of security provided by a given network.

It will be appreciated that in order to determine the "cheapest" network, the process may compare a cost-based factor for a network against comparable cost-based factors of the other networks. Similarly, in order to determine the "fastest" or "strongest" network, the process may compare relevant speed and strength factors of the networks against each other. Once all comparisons are made, the process can rank them and present options to the user in the GUI. It will be appreciated that the options in GUI 214 may be incorporated into GUI 212. It will be appreciated that when parameters are set for an option and an option is selected for the transmission network, the user may not necessarily be prompted with a network choice, as the embodiment would select an appropriate transport based on current setting. A default selection may be provided, having regard to current cost and quality characteristics of current networks. For example, with current networks, utilizing a Wi-Fi network is likely cheaper than utilizing a cellular network. As such, a default choice may be set to utilize a Wi-Fi network connection. Additionally, an option may be provided in the GUI to change such settings and to provide lists (such as an order list or cost list) of the different transport mediums, as they may differ depending on the network providers' or users' plans.

The GUI may also present technical, transmission strength information to the user relating to the various networks. Such information may include the signal strength(s) of each network, the current transmission rates, the current loss of data rates, etc. One or more aspects of the transmission information may be provided through graphical meters, ribbons, scales etc. in the GUI. Additionally or alternatively, the transmission strength information may be collected and ranked and the "strongest" network may be identified as the network associated with the "strongest" option.

In some cases, there may only be one available choice for transmitting the email due to some circumstance. For example, the connection to cellular network 114 may be temporarily lost. In such as instance, GUI 214 may be modified accordingly to present only the options that are currently viable. If there is only one transmission option currently viable, then GUI 214 may not be generated. Alternatively, a GUI may be generated indicating that only one transmission option is available and requesting that the user confirm use of same for transmission. Alternatively still, if an option is not viable, it may still be presented, but a message may be provided to indicate that the network is not currently available and that if the option is selected, the transmission will be made using that network once it is available. This may be tracked by network communication modules in the device. Unsent messages may be queued within the device until the selected network is available.

As noted earlier, device 108A may be in simultaneous contact with several networks of a given technology. As such, part of the evaluations include evaluating different connections for a given technology for a given option, determining the characteristics of the connections for that option and utilizing the "best" connection for that option.

Referring back to Fig. 2A, after the user initiates a selection, in step 210 device 108A identifies the selected network type for transmission of the email, then processes the data transmission for transmission. It will be appreciated that the term processing a data transmission may include one or more processes, including encoding the email in an appropriate data stream for the selected network and initiating transmission of the data stream over the selected network. Generally, the device transmits all packets for the email over the same network. The tracking data for the transmission modes is also updated.

In other embodiments, step 206 may be done at intervals (e.g. once every minute, 10 minutes, 30 minutes, 60 minutes etc.) and / or at specific events (e.g. when device is turned on, when a "compose" message command is initiated, when a "send" message command is initiated, etc.).

In other embodiments, the GUI of step 208 may not be presented to the user during the composition of a message or may be presented only at selected times and / or events. In such configurations, a set of default option preferences for networks may be established (e.g. through a preferences GUI) for one or more characteristics through a GUI screen which is separate from the composition screen. Through the preferences screen, the transmission characteristics may be ranked. The data and rankings associated with the settings in the GUI screen may be saved. When a message is sent, the data relating to the preferences are reviewed and the characteristics of the networks and the identified default selection may be used without further evaluations. Alternatively, one or more of the preferences may be evaluated to determine the network to use for the transmission. As such, the "default" network may be preset or dynamic. One embodiment may have the default set to the last network by the device. Such data may be stored in a data variable tracked by device 108A. Additionally, such data may be extracted from a transport recipient cache.

In step 208, if the user selects a network to transmit the email that is different from the stored "default" network, in one embodiment, the device 108A can check the transmission characteristics of the selected network and evaluate whether or not device 108A has sufficient coverage in its current location to use the selected network. If the evaluation indicates that there is not sufficient coverage (e.g. weak signal strength, high rate of lost packets, etc.), transmission may be deferred until such sufficient coverage for the selected network is confirmed. This can be confirmed through status messages generated on device 108A.

Another option (not shown) allows the user to select an encoding protocol for the message. Such encoding protocols may include, without limitation: none, S/MIME or PGP.

In an embodiment, the selection of the network is conducted on a per-email basis. In other embodiments, the default network selection may be preset and then subsequently changed.

While the above noted example describes processing of an outbound email message, in other embodiments, other outbound data or messages may be provided with similar options for transmission. For example, other embodiments may process text messages, SMS messages, calendar data, data synchronization messages, semaphores, GPS signals, or other transmissions.

In another embodiment, a transport may be selected by allowing the user to choose the transport during composition of a message instead of after the message is composed and the send command is initiated.

It will be appreciated that an embodiment provides the user of device 108A with more flexibility and options when initiating an outbound data transmission. For example, an embodiment allows a user to specifically select a type of network. This may be beneficial if the user has a specific security concern and requires use of a specific network.

Further still, in other embodiments, a setting may be provided to have inbound data streams monitored on a communication network that is either the same or different than the network selected for outbound communications.

Further still, in other embodiments, error detection and correction algorithms may be used during the data transmission.

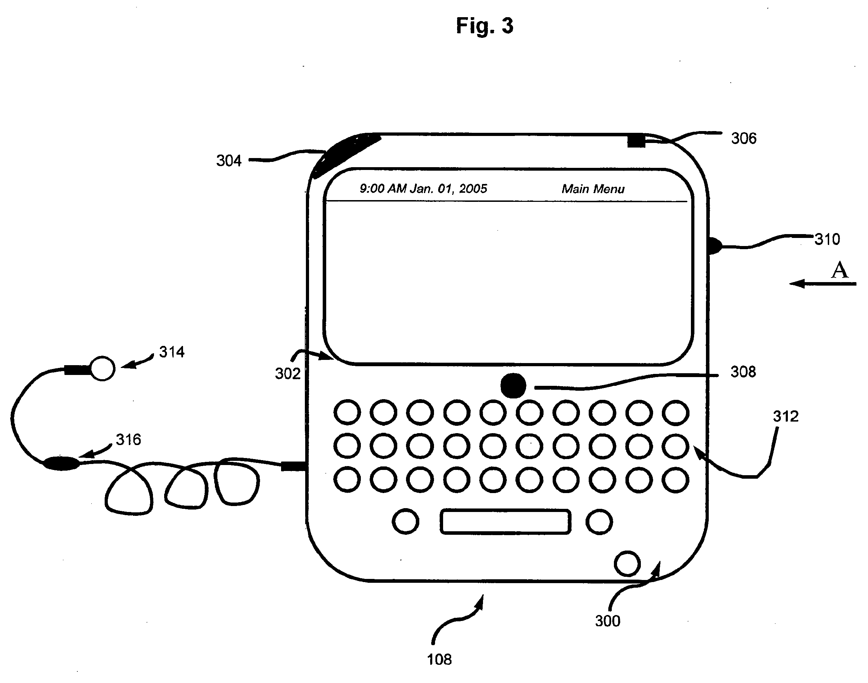

Fig. 3 provides general features of an electronic device for processing electronic communications in accordance with an embodiment, which is indicated generally at 108. In an embodiment, electronic device 108 is based on a computing platform having functionality of an enhanced personal digital assistant with cellphone and email features. It is, however, to be understood that electronic device 108 can be based on construction design and functionality of other electronic devices, such as smart telephones, desktop computers, pagers or laptops having telephony equipment. In a present embodiment, electronic device 108 includes a housing 300, an LCD 302, speaker 304, an LED indicator 306, a trackball 308, an ESC ("escape") key 310, keypad 312, a telephone headset comprised of an ear bud 314 and a microphone 316. ESC key 310 can be inwardly depressed along the path of arrow "A" as a means to provide additional input to device 108. Similarly, trackball 308 may be depressed inwardly to provide an additional input.

It will be understood that housing 300 can be made from any suitable material as will occur to those of skill in the art and may be suitably formed to house and hold all components of device 108.

Device 108 is operable to conduct wireless telephone calls, using any known wireless phone system such as a Global System for Mobile Communications (GSM) system, Code Division Multiple Access (CDMA) system, CDMA 2000 system, Cellular Digital Packet Data (CDPD) system and Time Division Multiple Access (TDMA) system. Other wireless systems can implement one of the 802.11 protocols, which may include support for voice. Additionally, a Bluetooth network may be supported. Other embodiments include Voice over IP (VoIP) type streaming data communications that can simulate circuit-switched phone calls. Further in other embodiments, device 108 may be able to communicate with a Wi-Max network, i.e. a 802.16-class network. Ear bud 314 can be used to listen to phone calls and other sound messages and microphone 316 can be used to speak into and input sound messages to device 108.

Referring to Fig. 4, functional components of device 108 are provided in schematic 400. The functional components are generally electronic, structural or electro-mechanical devices. In particular, microprocessor 402 is provided to control and receive almost all data, transmissions, inputs and outputs related to device 108. Microprocessor 402 is shown schematically as coupled to keypad 312 and other internal devices. Microprocessor 402 controls the overall operation of the device 108 and its components. Exemplary microprocessors for microprocessor 402 include microprocessors in the Data 950 (trademark) series, the 6200 series and the PXA900 series, all available at one time from Intel Corporation. Microprocessor 402 is connected to other elements in device 108 through a series of electrical connections to its various input and output pins. Microprocessor 402 has an IRQ input line which allows it to receive signals from various devices. Appropriate interrupt firmware is provided which receives and reacts to the signals detected on the IRQ line.

In addition to the microprocessor 402, other internal devices of the device 108 are shown schematically in Fig. 3. These include: display 302; speaker 304; keypad 312; communication sub-system 404; short-range communication sub-system 406; auxiliary I/O devices 408; serial port 410; microphone port 412 for microphone 316; flash memory 414 (which provides persistent storage of data); random access memory (RAM) 416; clock 418 and other device sub-systems (not shown). Device 108 may comprise a two-way radio frequency (RF) communication device having voice and data communication capabilities. In addition, device 108 may have the capability to communicate with other computer systems via the Internet.

Operating system software executed by the microprocessor 402 may be stored in a computer-readable medium, such as flash memory 414, or may be stored in other types of memory devices, such as read-only memory (ROM) or similar storage element. In addition, system software, specific device applications, or parts thereof, may be temporarily loaded into a volatile store, such as RAM 416. Communication signals received by the mobile device may also be stored to RAM 416.

In addition to an operating system operating on device 108, additional software modules 420 enable execution of software applications on device 108. A set of software (or firmware) applications, generally identified as applications 420, that control basic device operations, such as voice communication module 420A and email module 420B (to handle generation of emails and incoming/outgoing messages), may be installed on the device 108 during manufacture or downloaded thereafter. Email module 420B allows the processing of emails, data and other data transmission at by device 108 to enable device 108 to generate views of aspects of the emails, data and data transmissions. As such, inbound and outbound data transmissions can be viewed and processed by email module 420B. In the embodiment, other processes and modules are provided to handle the selection and transmission of the emails, data and data transmissions. These other module receive the completed outbound data transmissions from email module 420B and then parse, package and transmit the resulting data stream through the selected network. As well, software modules, such as calendar module 420C, address book 420D and location module 420E are provided.

Transmission tracking module (TTM) 420M comprises software and / or firmware that tracks data, such as the current state of availability and characteristics of various network with which device 108 has or had a connections. Such data may include relevant connection data such as signal strength, time of last connection, transmission characteristics of the previous n transmissions or any other relevant trackable statistical feature of a transmission. TTM 420M may implement or encode one or more processes as described herein relating to tracking network connections, identifying a particular network connection to use and providing any GUI modules to set transmission defaults and provide options in the GUI for using any defaults or overrides. Additionally or alternatively, a separate module (not shown) may be provided to manage at least part of the GUI relating to the setting of defaults, the presentation of options and the selection of new options for the selected network.

Network connection module (NCM) 420N comprises software and / or firmware that extracts local data relating to a one or more networks, which can then be used by TTM 420M. It also handles the lower level functions for processing communications by device 108.

Additional modules such as a personal information manager (PIM) application may be provided. Any module may be installed during manufacture or downloaded thereafter into device 108.

Data associated with each application, the status of one or more networks, profiles for networks and trigger conditions for commands for networks can be stored and updated in flash memory 414.

Communication functions, including data and voice communications, are performed through the communication sub-system 404 and the short-range communication sub-system 406. Collectively, sub-systems 404 and 406 provide the signal-level interface for all communication technologies processed by device 108. Various applications 420 provide the operational controls to further process and log the communications. Communication sub-system 404 includes receiver 422, transmitter 424 and one or more antennas, illustrated as receive antenna 426 and transmit antenna 428. In addition, communication sub-system 404 also includes processing modules, such as digital signal processor (DSP) 430 and local oscillators (LOs) 432. The specific design and implementation of communication sub-system 404 is dependent upon the communication network in which device 108 is intended to operate. For example, communication sub-system 404 of device 108 may operate with the Mobitex (trademark), DataTAC (trademark) or GPRS mobile data communication networks and also operate with any of a variety of voice communication networks, such as 802.11-class networks, Bluetooth networks, AMPS, TDMA, CDMA, CDMA 2000, PCS, GSM, GPRS, EGDE, UMTS networks etc. Other types of data and voice (telephonic) networks, both separate and integrated, may also be utilized with device 108. In any event, communication sub-system 404 provides device 108 with the capability of communicating with other devices using various communication technologies, including instant messaging (IM) systems, text messaging (TM) systems and short message service (SMS) systems.

Short-range communication sub-system 406 enables communication between device 108 and other proximate systems or devices, which need not necessarily be similar devices. For example, the short-range communication sub-system may include an infrared device and associated circuits and components, a Wi-Fi or a Bluetooth (™) communication module to provide for communication with similarly enabled systems and devices. Sub-system 406 may have one or more inputs or outputs to sub-system 404 in processing signals for its networks.

In addition to processing communication signals, DSP 430 provides control of receiver 426 and transmitter 424. For example, gains applied to communication signals in receiver 426 and transmitter 424 may be adaptively controlled through automatic gain-control algorithms implemented in DSP 430. One particular operational aspect of receiver 422 and antenna 426 is that they need to be tuned to receive signals in the 802.11 network bands, e.g. signals in the 2.4 GHz to 5.8 GHz range for sub-systems 406 and if needed, sub-system 404. Additional filters on antenna may also be used to provide such functionality. NCM 420N can receive and interpret the signals and can generate its own queries to networks 110 and 114 to acquire technical performance data relating to each network. Such data can then be stored and used by TTM 420M.

Receiver 422, antenna 426 and NCM 420N provide at least some of the hardware and software elements needed to detect when device 108 is in the presence of communication signals from wireless network 110, thereby enabling device 108 to communication with other devices in wireless network 110.

Powering the entire electronics of the device 108 is power source 434. In one embodiment, the power source 434 includes one or more batteries. In another embodiment, the power source 434 is a single battery pack, especially a rechargeable battery pack. In another embodiment, the device may be solar-powered. A power switch (not shown) provides an "on/off' switch for device 108. A power source interface (not shown) may be provided in hardware, firmware, software or a combination of such elements to selectively control access of components in device 108 to power source 434. Upon activation of the power switch an application 420 is initiated to turn on device 108. Upon deactivation of the power switch, an application 420 is initiated to turn off device 108. Power to device 108 may also be controlled by other devices and by software applications 420.

Device 108 may also have global positioning system 436 to assist in identifying a present location of device 108 and may also have light sensor 438 to provide data on the ambient light conditions for device 108.

It will be appreciated that modules 420M, 420N and other applications in the embodiments can be implemented using known programming techniques, languages and algorithms. The titles of the modules are provided as a convenience to provide labels and assign functions to certain modules. It is not required that each module perform only its functions as described above. As such, specific functionalities for each application may be moved between applications or separated into different applications. Modules may be contained within other modules. Different signalling techniques may be used to communicate information between applications using known programming techniques. Known data storage, access and update algorithms allow data to be shared between applications. It will further be appreciated that other applications and systems on device 108 may be executing concurrently with any module 420. As such, one or more aspects of modules 420M and 420N may be structured to operate in as a "background" application on device 108, using programming techniques known in the art.

It will be appreciated that a feature of the embodiment provides an easy selection mechanism to allow a user to assess and decide which communication network to use for a transmission. Such a selection mechanism addresses deficiencies in the prior art.

Although an embodiment has been described in terms of evaluating and / or otherwise searching for a set of connections for a multi-mode communication device when it is about to transmit a data transmission, it will be appreciated that in other embodiments, additional tests or accommodations made by made for one or more networks and one or more data communication (both receiving and transmitting) conditions.

As used herein, the wording "and / or" is intended to represent an inclusive-or. That is, "X and / or Y" is intended to mean X or Y or both.

Aspects and features of this disclosure are set out in the following paragraphs (provided as clauses) which relate to the claims of the parent application as filed:

1. A method for selecting a network from a plurality of networks for use by a communication device to process a data transmission, the method comprising:
tracking a plurality of transmission characteristics for said plurality of networks;
accessing a set of options to identify a set of said plurality of transmission characteristics;
evaluating said set of plurality of transmission characteristics for each of said plurality of networks to identify a selected network from said plurality of networks for each option of said set of options; and
when a selected option of said set of options is selected, processing said data transmission using the selected network associated with the selected option.

2. The method as claimed in clause 1, further comprising:
prior to processing said data transmission, displaying said set of options in a list on said device; and
utilizing a selected choice from said list to be said selected option.

3. The method as claimed in clause 2, further comprising displaying said set of options in a list on a display of said device in a graphical user interface 'GUI'.

4. The method as claimed in any one of clauses 1 to 3, wherein:
said data transmission comprises an outbound transmission.

5. The method as claimed in any one of clauses 1 to 4, wherein
said plurality of networks comprises at least a cellular network and a Wireless-Fidelity 'Wi-Fi' network; and
one characteristic of said selected transmission characteristics comprises a cost to transmit said outbound transmission.

6. The method as claimed in clause 4 or clause 5 when dependent on clause 4, wherein said outbound transmission comprises an email.

7. The method as detailed in any one of the preceding clauses, wherein said set of options comprises any one or any combination of the following options:
a first option to use an immediately previously used network for said selected network;
a second option to use a first network that has a transmission characteristic stronger than a transmission characteristic of a second network, the first and second networks within the plurality of networks; and
a third option to use a network of said plurality of networks that has a predetermined level of security.

8. The method as detailed in any one of the preceding clauses, wherein said set of options further comprises an attachment option to use a network of said plurality of networks that has been identified to transmit data transmissions having attachments.

9. The method as detailed in any one of the preceding clauses, wherein said set of options further comprises an option to use a network of said plurality of networks that has been identified to transmit said data transmission when said data transmission is a predetermined size.

10. The method as detailed in any one of the preceding clauses, wherein during processing of said data transmission, each data packet associated with said data transmission is marked as being transmitted via said selected network.

11. The method as detailed in any one of the preceding clauses, wherein processing of said data transmission through said network is deferred if said network is currently unavailable to said device until said network is available to said device.

12. The method as detailed in any one of the preceding clauses, wherein:
said plurality of networks comprises at least two networks of the same transmission technology; and
said set of options further comprises an option to use a network of said plurality of networks that has accessed said at least two networks.

13. A communication device having communication capabilities with a plurality of networks, the communication device comprising:
a microprocessor;
a display;
memory;
a communication subsystem to provide transmission and reception of a data transmission with said plurality of networks;
a first module to track a plurality of transmission characteristics of said plurality of networks and to store results in said memory;
a second module to monitor a set of options relating to said plurality of networks based on said plurality of transmission characteristics and to determine a selected network of said plurality of networks after evaluating said set of options to carry said data transmission;
a third module to selectively display a list relating to said set of options on said display and to allow a selection to be made to from said list to become said selected network; and
a fourth module to process said data transmission at said device utilizing said selected network.

14. The communication device as detailed in clause 13, wherein:
said data transmission comprises an outbound transmission;
said plurality of networks comprises at least a cellular network and a Wireless-Fidelity 'Wi-Fi' network;
said plurality of transmission characteristics comprises a cost of usage to transmit said outbound transmission; and
said set of options comprises a cost-based option reflecting said cost of usage.

15. The communication device as claimed in clause 14, wherein:
said outbound transmission comprises an email; and
said fourth module comprises an application operating through said microprocessor to generate and review emails directed to said device.

16. The communication device as detailed in any one of clauses 13 to 15, wherein said set of options comprises a default option to select an immediately previously used network for said selected network.

17. The communication device as detailed in any one of clauses 13 to 16, wherein said set of options comprises an option to select a first network of said plurality of networks that has a transmission characteristic stronger than a transmission characteristic of a second network of said plurality of networks.

18. The communication device as detailed in any one of clauses 13 to 17, further comprising:
a fifth module to encode said data transmission in a manner determined from a selected encoding option,
wherein said set of options comprises an encoding option for said data transmission prior to said fourth module processing said data transmission using said selected network.

19. The communication device as detailed in any one of clauses 13 to 18, wherein said fourth module is arranged to mark each data packet associated with said data transmission as being transmitted by said selected network.

20. The communication device as detailed in any one of clauses 13 to 19, wherein said fourth module is arranged to defer transmission of said data transmission through said selected network if said selected network is currently unavailable to said device until said selected network is available to said device.

21. A computer readable medium containing computer-executable instructions that, when performed by processor of a computing device, cause said processor computing device to perform the steps of the method of any one of clauses 1 to 12.

The present invention is defined by the claims appended hereto, with the foregoing description being merely illustrative of embodiments of the present disclosure. Those of ordinary skill may envisage certain modifications to the foregoing embodiments which, although not explicitly discussed herein, do not depart from the scope of the invention, as defined by the appended claims.

## Claims

1. A method for network selection for use by a communication device (108A) to process a data transmission, the method comprising:
evaluating a plurality of transmission characteristics for each network of a plurality of networks to identify a network having transmission characteristics relating to one or more options;
when a data transmission is to be processed, presenting in a graphical user interface on the device the one or more options;
receiving a selection of one option of the one or more options; and
processing the data transmission using an associated network from the plurality of networks, the associated network being associated with the selection.

2. The method as claimed in claim 1, wherein the plurality of networks comprises at least a cellular network and a Wireless-Fidelity 'Wi-Fi' network.

3. The method as claimed in any one of the preceding claims, wherein the plurality of networks comprises at least two networks of the same technology.

4. The method as claimed in any one of the preceding claims, further comprising tracking the plurality of transmission characteristics for each of the plurality of networks.

5. The method as claimed in any one of the preceding claims, wherein the data transmission is an outbound data transmission being sent from the communication device (108A).

6. The method as claimed in any one of the preceding claims, wherein the one or more options comprises at least one of the following options:
a first option to select a network of a specified technology;
a second option to select a first network that provides a lower transmission cost than the transmission cost of a second network, the first and second networks being within the plurality of networks;
a third option to select a first network that has a transmission characteristic stronger than a transmission characteristic of a second network;
a fourth option to select a network of the plurality of networks that has a predetermined level of security;
a fifth option to select a network of the plurality of networks, if the size of the data transmission has reached a threshold;
a sixth option to select a network of the plurality of networks based on a prior transmission history on the device; and
a seventh option to select a network based on the presence of an attachment in the data transmission.

7. The method according to claim 6, wherein the transmission characteristic comprises a signal quality.

8. The method according to claim 6, wherein the prior transmission history comprises at least one of:
the last network selected for data transmission; and
the amount of data that has been sent over a given network over a given time period.

9. The method according to claim 8, wherein if the amount of data sent over the given network over the given period has reached a limit, then another network of the plurality of networks other than the given network is selected for processing the data transmission.

10. The method as claimed in any one of the preceding claims, wherein during processing of the data transmission, each data packet associated with the data transmission is marked as being transmitted via the associated network.

11. The method as claimed in any one of the preceding claims, wherein processing of the data transmission using an associated network is deferred if the associated network is currently unavailable to the communication device (108A) until the associated network is available to communication device (108A).

12. The method as claimed in claim 11, further comprising providing at least one of: an indication that the associated network is currently unavailable, and an indication that the transmission will be processed when the associated network becomes available.

13. The method as claimed in any one of the preceding claims, wherein the evaluating comprises reconfirming operating parameters of types of transmission modes available on the communication device (108A) for transmitting the data transmission.

14. A wireless communication device (108A) comprising a processor (402), a memory having computer executable instructions stored thereon (302) which when executed by the processor would perform the method of any one of the preceding claims.

15. A computer readable medium containing computer-executable instructions that, when performed by processor (402) of a communication device (108A), cause the processor of the communication device (108A) to perform the steps of the method of any one of claims 1 to 13.

## Patentansprüche

1. Verfahren zur Netzwerkauswahl zur Verwendung durch eine Kommunikationsvorrichtung (108A), um eine Datenübertragung zu verarbeiten, wobei das Verfahren aufweist:
Evaluieren einer Vielzahl von Übertragungscharakteristiken für jedes Netzwerk aus einer Vielzahl von Netzwerken, um ein Netzwerk mit Übertragungscharakteristiken zu identifizieren, die eine oder mehrere Option(en) betreffen;
wenn eine Datenübertragung zu verarbeiten ist, Präsentieren der einen oder mehreren Option(en) in einer graphischen Benutzerschnittstelle auf der Vorrichtung;
Empfangen einer Auswahl einer Option aus der einen oder mehreren Option(en); und
Verarbeiten der Datenübertragung unter Verwendung eines assoziierten Netzwerks aus der Vielzahl von Netzwerken, wobei das assoziierte Netzwerk mit der Auswahl assoziiert ist.

2. Das Verfahren gemäß Anspruch 1, wobei die Vielzahl von Netzwerken zumindest ein zellulares Netzwerk und ein Wi-Fi(Wireless-Fidelity)-Netzwerk aufweist.

3. Das Verfahren gemäß einem der vorhergehenden Ansprüche, wobei die Vielzahl von Netzwerken zumindest zwei Netzwerke derselben Technologie aufweist.

4. Das Verfahren gemäß einem der vorhergehenden Ansprüche, das weiter ein Verfolgen der Vielzahl von Übertragungscharakteristiken für jedes der Vielzahl von Netzwerken aufweist.

5. Das Verfahren gemäß einem der vorhergehenden Ansprüche, wobei die Datenübertragung eine abgehende Datenübertragung ist, die von der Kommunikationsvorrichtung (108A) gesendet wird.

6. Das Verfahren gemäß einem der vorhergehenden Ansprüche, wobei die eine oder mehreren Option(en) zumindest eine der folgenden Optionen aufweist/aufweisen:
eine erste Option zum Auswählen eines Netzwerks einer spezifizierten Technologie;
eine zweite Option zum Auswählen eines ersten Netzwerks, das geringere Übertragungskosten als die Übertragungskosten eines zweiten Netzwerks vorsieht, wobei die ersten und zweiten Netzwerke in der Vielzahl von Netzwerken sind;
eine dritte Option zum Auswählen eines ersten Netzwerks, das eine Übertragungscharakteristik hat, die stärker ist als eine Übertragungscharakteristik eines zweiten Netzwerks;
eine vierte Option zum Auswählen eines Netzwerks aus der Vielzahl von Netzwerken, das eine vorgegebene Sicherheitsstufe hat;
eine fünfte Option zum Auswählen eines Netzwerks aus der Vielzahl von Netzwerken, wenn die Größe der Datenübertragung eine Schwelle erreicht hat;
eine sechste Option zum Auswählen eines Netzwerks aus der Vielzahl von Netzwerken basierend auf einer früheren Übertragungshistorie auf der Vorrichtung; und
eine siebte Option zum Auswählen eines Netzwerks basierend auf dem Vorhandensein eines Anhangs in der Datenübertragung.

7. Das Verfahren gemäß Anspruch 6, wobei die Übertragungscharakteristik eine Signalqualität aufweist.

8. Das Verfahren gemäß Anspruch 6, wobei die frühere Übertragungshistorie zumindest eines aufweist aus:
das letzte Netzwerk, das zur Datenübertragung ausgewählt wurde; und
die Menge an Daten, die über ein gegebenes Netzwerk über eine gegebene Zeitperiode gesendet wurde.

9. Das Verfahren gemäß Anspruch 8, wobei, wenn die Menge von Daten, die über das gegebene Netzwerk über die gegebene Zeitperiode gesendet wurde, eine Grenze erreicht hat, ein anderes Netzwerk aus der Vielzahl von Netzwerken, das von dem gegebenen Netzwerk verschieden ist, zur Verarbeitung der Datenübertragungsnetzwerke ausgewählt wird.

10. Das Verfahren gemäß einem der vorhergehenden Ansprüche, wobei während einer Verarbeitung der Datenübertragung jedes Paket, das mit der Datenübertragung assoziiert ist, als über das assoziierte Netzwerk übertragen markiert wird.

11. Das Verfahren gemäß einem der vorhergehenden Ansprüche, wobei das Verarbeiten der Datenübertragung unter Verwendung eines assoziierten Netzwerks verzögert wird, wenn das assoziierte Netzwerk für die Kommunikationsvorrichtung (108A) momentan nicht verfügbar ist, bis das assoziierte Netzwerk für die Kommunikationsvorrichtung (108A) verfügbar ist.

12. Das Verfahren gemäß Anspruch 11, das weiter aufweist ein Vorsehen zumindest eines aus: eine Angabe, dass das assoziierte Netzwerk momentan nicht verfügbar ist, und eine Angabe, dass die Übertragung verarbeitet werden wird, wenn das assoziierte Netzwerk verfügbar wird.

13. Das Verfahren gemäß einem der vorhergehenden Ansprüche, wobei das Evaluieren aufweist ein erneutes Bestätigen von Betriebsparametern von Typen von Übertragungsmodi, die auf der Kommunikationsvorrichtung (108A) verfügbar sind zum Übertragen der Datenübertragung.

14. Eine drahtlose Kommunikationsvorrichtung (108A), die einen Prozessor (402), einen Speicher mit darauf gespeicherten computerausführbaren Anweisungen (302) aufweist, die bei Ausführung durch den Prozessor das Verfahren gemäß einem der vorhergehenden Ansprüche ausführen.

15. Ein computerlesbares Medium, das computerausführbare Anweisungen enthält, die bei Ausführung durch einen Prozessor (402) einer Kommunikationsvorrichtung (108A) den Prozessor der Kommunikationsvorrichtung (108A) veranlassen, die Schritte des Verfahrens gemäß einem der Ansprüche 1 bis 13 ausführen.

## Revendications

1. Procédé de sélection du réseau destiné à être utilisé par un dispositif de communication (108A) pour traiter une transmission de données, le procédé comprenant les étapes consistant à :
évaluer une pluralité de caractéristiques de transmission pour chaque réseau parmi une pluralité de réseaux, afin d'identifier un réseau ayant des caractéristiques de transmission portant sur une ou plusieurs options ;
lorsqu'une transmission de données doit être traitée, présenter lesdites une ou plusieurs options dans une interface utilisateur graphique sur le dispositif ;
recevoir la sélection d'une option sur lesdites une ou plusieurs options ;
traiter la transmission de données à l'aide d'un réseau associé parmi la pluralité de réseaux, le réseau associé étant associé à la sélection.

2. Procédé selon la revendication 1, dans lequel la pluralité de réseaux comprend au moins un réseau cellulaire et un réseau WiFi pour « *Wireless Fidelity* ».

3. Procédé selon l'une quelconque des revendications précédentes, dans lequel la pluralité de réseaux comprend au moins deux réseaux appartenant à la même technologie.

4. Procédé selon l'une quelconque des revendications précédentes, comprenant en outre l'étape consistant à suivre la pluralité de caractéristiques de transmission pour chaque réseau parmi la pluralité de réseaux.

5. Procédé selon l'une quelconque des revendications précédentes, dans lequel la transmission de données est une transmission sortante de données qui est envoyée par le dispositif de communication (108A).

6. Procédé selon l'une quelconque des revendications précédentes, dans lequel lesdites une ou plusieurs options comprennent au moins l'une des options suivantes :
une première option de sélection d'un réseau ayant une technologie spécifiée ;
une deuxième option de sélection d'un premier réseau qui offre un coût de transmission inférieur au coût de transmission d'un deuxième réseau, le premier et le deuxième réseaux appartenant à la pluralité de réseaux ;
une troisième option de sélection d'un premier réseau ayant une caractéristique de transmission plus puissante qu'une caractéristique de transmission d'un deuxième réseau ;
une quatrième option de sélection d'un réseau qui offre un niveau prédéterminé de sécurité parmi la pluralité de réseaux ;
une cinquième option de sélection d'un réseau parmi la pluralité de réseaux si la taille de la transmission de données a atteint un certain seuil ;
une sixième option de sélection d'un réseau parmi la pluralité de réseaux, en fonction de l'historique des transmissions antérieures sur le dispositif ; et
une septième option de sélection d'un réseau en fonction d'un pièce jointe dans la transmission de données.

7. Procédé selon la revendication 6, dans lequel la caractéristique de transmission comprend une qualité du signal.

8. Procédé selon la revendication 6, dans lequel l'historique des transmissions antérieures comprend au moins :
soit le dernier réseau sélectionné pour la transmission de données ;
soit la quantité de données qui a été envoyée sur un réseau considéré pendant une période de temps considérée.

9. Procédé selon la revendication 8, dans lequel, si la quantité de données envoyée sur le réseau considéré pendant une période de temps considérée a atteint une limite, un autre réseau que le réseau considéré est sélectionné parmi la pluralité de réseaux pour le traitement de la transmission de données.

10. Procédé selon l'une quelconque des revendications précédentes, dans lequel, pendant le traitement de la transmission de données, chaque paquet de données associé à la transmission de données est marqué comme ayant été transmis par le réseau associé.

11. Procédé selon l'une quelconque des revendications précédentes, dans lequel le traitement de la transmission de données à l'aide d'un réseau associé est retardé, si le réseau associé est actuellement indisponible pour le dispositif de communication (108A), jusqu'à ce que le réseau associé soit disponible pour le dispositif de communication (108A).

12. Procédé selon la revendication 11, comprenant en outre l'étape consistant à fournir au moins une des indications suivantes :
une indication du fait que le réseau associé est actuellement indisponible ; et
une indication que la transmission sera traitée lorsque le réseau associé deviendra disponible.

13. Procédé selon l'une quelconque des revendications précédentes, dans lequel l'étape d'évaluation comprend l'étape consistant à confirmer à nouveau des paramètres de fonctionnement des types de modes de transmission disponibles sur le dispositif de communication (108A) pour l'émission de la transmission de données.

14. Dispositif de communication sans fil (108A) comprenant un processeur (402), une mémoire comportant des instructions exécutables par un ordinateur qui y sont stockées (302) et qui, lorsqu'elles sont exécutées par le processeur, mettent en oeuvre le procédé selon l'une quelconque des revendications précédentes.

15. Support lisible par ordinateur contenant des instructions exécutables par un ordinateur qui, lorsqu'elles sont exécutées par le processeur (402) d'un dispositif de communication (108A), commandent au processeur du dispositif de communication (108A) d'exécuter les étapes du procédé selon l'une quelconque des revendications 1 à 13.
